# EUROPEAN PATENT APPLICATION

(11) **EP 2 204 809 A1**
(43) Date of publication of application: **07.07.2010**
(21) Application number: 08843635.7
(22) Date of filing: 29.10.2008
(51) Int. Cl.: G11B 23/00

(54) **CHUCKING PLATE FOR DISC CARTRIDGE, METHOD FOR MANUFACTURING THE CHUCKING PLATE, AND DISC CARTRIDGE**

(30) Priority: 02.11.2007 JP 2007286765
(71) Applicant: Sony Corporation, Tokyo 108-0075 (JP)
(72) Inventor: KOBAYASHI, Daiki, Tokyo 108-0075 (JP)
(74) Representative: Müller - Hoffmann & Partner
(86) International application number: PCT/JP2008/069661
(87) International publication number: WO 2009/057646

(57) **Abstract**

Costs are reduced by rationalizing the process while maintaining the sliding performance with respect to a optical disk and a disk table and the reliability is improved. A plate 21 having a slidability film 17, which has heat-resistant, non-adhesive characteristics, on one side thereof is used as a material. A chucking plate is formed by subjecting the plate 21 to predetermined press processing from a side at which the slidability film is not formed, and is attached to a cartridge housing 2 such that a slidability-film-applied surface 8d faces a disk 5.

## Description

### Technical Field

The present invention relates to a chucking plate used for rotating a disk, such as an optical disk, while magnetically chucking the disk on a disk table (spindle cone) included in a disk driving unit of a recording-reproducing apparatus. The present invention also relates to a method for manufacturing the chucking plate and a disk cartridge including the chucking plate.

### Background Art

Examples of disk-shaped recording media include write-once or rewritable optical disks which allow various data, such as sound data, video data, and process data for computers, to be recorded and reproduced, and reproduction-only optical disk on which various data are recorded. In general, if a disk-shaped recording medium has foreign substance, such as dirt or fingerprint, or scratches on a data recording surface thereof, the operation of recording or reproducing data cannot be reliably performed. Therefore, the disk-shaped recording medium is generally housed in a cartridge housing in a rotatable manner, and is provided in the form of a disk cartridge.

For example, disk cartridges described in Japanese Unexamined Patent Application Publication No. 2007-87517 and Japanese Unexamined Patent Application Publication No. 2007-95206 include optical disks on which high-density recording can be performed using a short-wavelength light beam and a high-numerical-aperture objective lens. If such an optical disk has foreign substance, such as dirt, attached thereto and is stained, recording or reproducing error easily occurs. Therefore, in the disk cartridge, an inner rotor for holding the optical disk in a rotatable manner and a pair of shutter members for opening an opening section such that the optical disk faces the outside in the recording and/or reproducing operation of the optical disk are provided in a cartridge housing including an upper shell and a lower shell that are combined together. Thus, the disk cartridge is structured such that foreign substance, such as dust, cannot easily enter the cartridge housing and such that the opening section can be prevented from being opened or closed unintentionally, thereby protecting the optical disk.

Here, the disk cartridge may be used in various environments, such as a high-temperature, high-humidity environment, a low-temperature environment, or an environment with a large amount of dust or the like. When the disk cartridge is left for a long time in, for example, a high-temperature environment, there is a risk that components such as the cartridge housing, the inner rotor, or shutter blades will be deformed and will damage the optical, disk by coming into contact therewith as a result of the deformation. In addition, in the disk cartridge, there is also a risk that a slit will be formed in the cartridge housing as a result of the deformation of the above-mentioned components and dust or the like will enter the disk cartridge. As a result, the dirt or the like will adhere to the optical disk and the recording-reproducing characteristics will be degraded. As disclosed in Japanese Unexamined Patent Application Publication No. 2007-87517 and Japanese Unexamined Patent Application Publication No. 2007-95206, the disk cartridge has features for solving the above-described problems.

In addition to the above-described problems caused by the external environment, as disclosed in, for example, Japanese Unexamined Patent Application Publication No. 2007-164864 and Japanese Unexamined Patent Application Publication No. 2007-164875, the disk cartridge also has structures for solving other various problems caused at the individual components and parts. Japanese Unexamined Patent Application Publication No. 2007-164864 describes countermeasures against mold in a high-temperature, high-humidity environment. Japanese Unexamined Patent Application Publication No. 2007-164875 describes countermeasures against separation of a synthetic resin component integrated with a metal plate.

The disk cartridge includes a chucking plate which faces a center hole of the optical disk with an attachment ring member disposed therebetween. The chucking plate is disposed on an inner surface of a central section of the cartridge housing which houses the optical disk in a rotatable manner. When the disk cartridge is loaded in a recording-reproducing apparatus, an opening operation of a shutter mechanism is performed so that the optical disk faces a recording-reproducing unit in the apparatus. In the disk cartridge, the chucking plate is magnetically chucked on a disk table included in a disk driving unit in the apparatus, and thereby holds the optical disk. The optical disk is rotated by the operation of the disk driving unit.

As described above, in the disk cartridge, the optical disk is held and rotated while the chucking plate disposed in the cartridge housing is magnetically chucked on the disk table included in the recording-reproducing apparatus. In the operation of chucking the chucking plate in the disk cartridge, the disk table and the optical disk slide along a principal surface of the chucking plate and an operation of receiving the optical disk at the center of the disk table (operation of positioning the center hole with respect to a rotational axis) is performed. Therefore, in the disk cartridge, the chucking plate, which is manufactured using an iron plate or the like as a material, is subjected to a lubricant-film applying process using paint which prevents rusting and which improves the sliding performance with respect to the optical disk and the disk table.

In a manufacturing process of the chucking plate according to the related art, first, an intermediate body is manufactured by steps including a pressing step in which a material, such as an iron plate, is subjected to a blanking process, an extrusion process, etc., using a progressive die; a washing process for removing lubricant and the like; a barreling process, which is a surface treatment step; and a preliminary washing process, such as hot-water washing or water washing. Then, in the manufacturing process of the chucking plate, the intermediate body is packaged, shipped, etc., and is transferred to a painting step. Then, in the painting step of the manufacturing process of the chucking plate, the intermediate body is for example, unpackaged, aligned using a jig, and is subjected to a pre-painting washing process, a drying process, and the like. Then, in the painting step, lubricant paint is applied by an electrostatic spray painting method or the like. Thus, the chucking plate is manufactured.

In the manufacturing process of the chucking plate, the chucking plate is packaged, shipped, etc., and is transferred to a disk assembly step or the like. In the manufacturing process of the chucking plate according to the related art, the chucking plate is manufactured by a large number of steps as described above, and the pressing step and the painting step are performed in different factories. Therefore, a large number of steps are required for the transfer and high costs are incurred.

Accordingly, an object of the present invention is to provide a chucking plate for a disk cartridge with which costs can be reduced by rationalizing the process while maintaining the sliding performance with respect to an optical disk and a disk table and with which reliability can be improved, and a method for manufacturing the chucking plate. Another object of the present invention is to provide a disk cartridge with which costs can be reduced and reliability can be improved by using a chucking plate with which costs can be reduced while maintaining the sliding performance and reliability can be improved.

### Disclosure of Invention

According to a chucking plate for a disk cartridge according to the present invention, which achieves the above-described object, a disk is rotatably housed in a cartridge housing including an upper shell and a lower shell which are combined together, and the chucking plate is attached to an inner surface of a central section of the upper shell with an attachment ring member therebetween such that the chucking plate faces a center hole in the disk. The chucking plate holds and rotates the disk while being magnetically chucked on a disk table included in a disk driving unit in a recording-reproducing apparatus in the state in which the disk cartridge is loaded in the recording-reproducing apparatus. A plate having a slidability film formed at one side thereof is used as a material of the chucking plate, and the chucking plate is attached to the cartridge housing such that the side at which the slidability film is formed faces the disk.

In the chucking plate for the disk cartridge, the plate used as the material is obtained by forming the slidability film including a primer coating layer and a fluorocarbon resin coating layer on a principal surface of a substrate. In addition, in the chucking plate for the disk cartridge may be **characterized in that** the slidability film is not formed on an outer peripheral end surface of the chucking plate.

In the chucking plate for the disk cartridge, the substrate on which the slidability film is formed at one side thereof is used as a material. Therefore, it is not necessary to perform the painting step, the steps performed before the painting step, etc., after the pressing step. As a result, the costs can be reduced. In addition, the slidability film is formed on a principal surface of the chucking plate which faces the disk table and the optical disk. Thus, the sliding performance is maintained. In the chucking plate, when the disk cartridge is loaded into the recording-reproducing apparatus and the chucking operation is performed, the disk table and the optical disk smoothly slide along the chucking plate. Accordingly, the disk-receiving operation in which the optical disk is received at the center of the disk table can be accurately performed.

According to a method for manufacturing a chucking plate for a disk cartridge according to the present invention, which achieves the above-described object, a disk is rotatably housed in a cartridge housing including an upper shell and a lower shell which are combined together, and the chucking plate is attached to an inner surface of a central section of the upper shell with an attachment ring member therebetween such that the chucking plate faces a center hole in the disk. The chucking plate holds and rotates the disk while being magnetically chucked on a disk table included in a disk driving unit in the state in which the disk cartridge is loaded in a recording-reproducing apparatus. In the method for manufacturing the chucking plate for the disk cartridge, a plate having a slidability film formed at one side thereof is used, and the chucking plate is manufactured by subjecting the plate to a pressing step from a side at which the slidability film is not formed and to a washing step, and is attached to the cartridge housing such that the side at which the slidability film is formed faces the disk.

According to the method for manufacturing the chucking plate for the disk cartridge, the substrate on which the slidability film is formed at one side thereof is used as a material. Therefore, it is not necessary to perform the painting step, the steps performed before the painting step, etc., after press processing. As a result, the manufacturing costs can be considerably reduced. In addition, the slidability film is formed on a principal surface of the chucking plate which faces the disk table and the optical disk. Thus, an inexpensive chucking plate in which the sliding performance is maintained is manufactured. According to the method for manufacturing the chucking plate, the slidability film is formed on the surface of the cartridge housing which faces the disk table and the optical disk, so that the sliding performance of the disk table and the optical disk can be maintained. Thus, the chucking plate can be manufactured in which, when the disk cartridge is loaded into the recording-reproducing apparatus and the chucking operation is performed, the disk table and the optical disk smoothly slide along the chucking plate. Accordingly, the disk-receiving operation in which the optical disk is received at the center of the disk table can be accurately performed.

In a disk cartridge according to the present invention, which achieves the above-described object, a disk is rotatably housed in a cartridge housing including an upper shell and a lower shell which are combined together. The disk cartridge includes a chucking plate attached to an inner surface of a central section of the upper shell with an attachment ring member therebetween such that the chucking plate faces a center hole in the disk. The chucking plate holds and rotates the disk while being magnetically chucked on a disk table included in a disk driving unit in the state in which the disk cartridge is loaded in a recording-reproducing apparatus. In the disk cartridge, the chucking plate is manufactured using a plate having a slidability film formed at one side thereof as a material by subjecting the plate to predetermined press processing from a side at which the slidability film is not formed, and is attached to the cartridge housing such that the side at which the slidability film is formed faces the disk.

The disk cartridge includes an inexpensive chucking plate manufactured using the substrate on which the slidability film is formed at one side thereof as a material so that it is not necessary to perform the painting step, the steps performed before the painting step, etc., after the pressing step. As a result, the manufacturing costs can be reduced. The disk cartridge includes the chucking plate which has the slidability film on a principal surface thereof along which the disk table and the optical disk slide, and the sliding performance of the chucking plate is equivalent or superior to that of the painting-type chucking plate according to the related art. Therefore, when the disk cartridge is loaded into the recording-reproducing apparatus and the chucking operation is performed, the disk table and the optical disk smoothly slide along the chucking plate. Accordingly, the disk-receiving operation in which the optical disk is received at the center of the disk table can be accurately performed and the reliability can be improved.

According to the chucking plate for the disk cartridge of the present invention, it is not necessary to perform the painting step, the steps performed before the painting step, etc., after press processing and the manufacturing costs can be considerably reduced as a result. Therefore, the chucking plate is inexpensive. In addition, the disk-receiving operation in which the optical disk is received at the center of the disk table can be accurately performed. In addition, degradation of the recording-reproducing characteristics or the like due to separation of the slidability film can be prevented. Thus, the reliability can be improved.

According to the method for manufacturing the chucking plate for the disk cartridge of the present invention, it is not necessary to perform the painting step, the steps performed before the painting step, etc., after press processing and the manufacturing costs can be considerably reduced as a result. In addition, the disk-receiving operation in which the optical disk is received at the center of the disk table can be accurately performed. In addition, degradation of the recording-reproducing characteristics or the like due to separation of the slidability film can be prevented. Thus, an inexpensive chucking plate having high reliability can be manufactured.

According to the disk cartridge of the present invention, it is not necessary to perform the painting step, the steps performed before the painting step, etc., after press processing and the manufacturing costs can be considerably reduced as a result. Therefore, the chucking plate included in the disk cartridge is inexpensive. In addition, the disk-receiving operation in which the optical disk is received at the center of the disk table can be accurately performed. In addition, degradation of the recording-reproducing characteristics or the like due to separation of the slidability film can be prevented. Thus, the costs can be reduced and the reliability can be improved.

### Brief Description of Drawings

[Fig. 1] Fig. 1 is an exploded perspective view of a disk cartridge according to an embodiment of the present invention.
[Fig. 2] Fig. 2 is a sectional view of a main part illustrating the state in which the disk cartridge is loaded in a recording-reproducing apparatus and a chucking operation is performed by a disk table.
[Fig. 3] Fig. 3 is a plan view of a chucking plate.
[Fig. 4] Fig. 4 is a diagram illustrating a stainless steel plate used in a manufacturing process of the chucking plate and obtained by forming a slidability film on a stainless substrate at one side thereof.
[Fig. 5] Fig. 5 is a diagram illustrating a burr generated at an outer peripheral edge of the chucking plate.
[Fig. 6] Fig. 6 is a diagram illustrating the manufacturing process of the chucking plate.
[Fig. 7] Fig. 7 is a characteristic diagram of the frictional coefficient of the chucking plate and a painting-type chucking plate according to the related art.

### Best Mode for Carrying Out the Invention

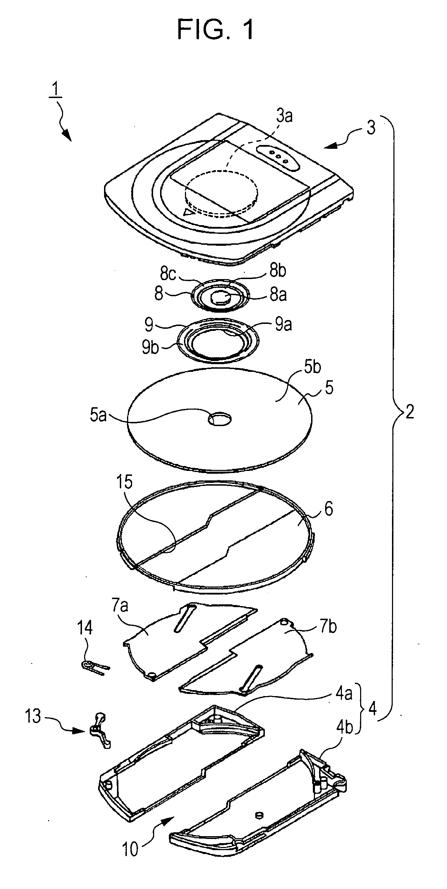

A disk cartridge 1 according to an embodiment of the present invention will be describe in detail with reference to the drawings. As shown in Fig. 1, the disk cartridge 1 includes a cartridge housing 2 obtained by combining an upper shell 3 and a lower shell 4 which are made of a synthetic resin, such as polycarbonate resin or ABS resin. Components including an optical disk 5 which serves as a recording medium, an inner rotor 6 which holds the optical disk 5 in a rotatable manner, a pair of shutter members 7a and 7b (hereinafter generically referred to as shutter members 7 unless they are explained individually), etc., are housed in the cartridge housing 2. In the disk cartridge 1, a chucking plate 8 is attached to the upper shell 3 so as to face a center hole 5a in the optical disk 5 with an attachment ring member 9 disposed therebetween.

In the disk cartridge 1, the lower shell 4 includes shell halves 4a and 4b which are each assembled to the upper shell 3 such that a recording-reproducing opening section 10 which extends in a diameter direction is provided at a central section of the lower shell 4. The recording-reproducing opening section 10 is normally closed by the shutter members 7. When the disk cartridge 1 is loaded in a recording-reproducing apparatus 11, the shutter members 7 are driven so as to open the recording-reproducing opening section 10. Accordingly, a signal recording surface 5b of the optical disk 5 faces the outside through the recording-reproducing opening section 10.

In the disk cartridge 1, the cartridge housing 2 enters a disk table 12 included in a disk driving unit in the recording-reproducing apparatus 11 through the recording-reproducing opening section 10 and the chucking plate 8 is chucked by the disk table 12. In the disk cartridge 1, a recording-reproducing head (optical pickup) included in the recording-reproducing apparatus 11 enters the cartridge housing 2 through the recording-reproducing opening section 10 and faces the signal recording surface 5b of the optical disk 5. As described below, in the disk cartridge 1, the optical disk 5 is rotated while being held by the chucking plate 8 and the disk table 12. In this state, data or the like recorded on the signal recording surface 5b is reproduced by the recording-reproducing head, or the data or the like is recorded on the signal recording surface 5b by the recording-reproducing head.

The optical disk 5 is a substrate made of, for example, an optically transparent synthetic resin material, and has a diameter of 12 cm, which is equal to the diameter of CDs and DVDs. In addition, the center hole 5a, which engages with the disk table 12 in the recording-reproducing apparatus 11, is formed at a central section of the optical disk 5. Although detailed descriptions are omitted, the optical disk 5 has a predetermined pattern including lands and grooves on the signal recording surface 5b which is irradiated with a light beam emitted from the recording-reproducing head. A reflective layer which reflects the light beam is provided on the predetermined pattern, and a signal recording layer made of phase change material, organic coloring matter, etc., is provided on the reflective layer. In addition, an optically transparent layer is provided on the signal recording layer. Data can be recorded on the lands and/or grooves by irradiating the optical disk 5 with the light beam at the side of the optically transparent layer.

A light beam having a wavelength of about 400 nm is used to record and/or reproduce data on/from the optical disk 5. An objective lens having a higher numerical aperture than that of an objective lens used for CDs and DVDs is included in the recording-reproducing head. Therefore, various data, such as still image data, moving image data, music data, or process data to be processed by a computer, can be recorded at a higher density compared to CDs and DVDs. Here, the disk included in the disk cartridge 1 is not limited to the optical disk 5, and other types of disks such as a magneto-optical disk, a magnetic disk, a reproduction-only optical disk, etc., may also be used. In addition, a cleaning disk may also be housed in the disk cartridge 1.

As described above, in the disk cartridge 1, the bottom surface of the cartridge housing 2 is defined by the lower shell 4 including the shell halves 4a and 4b, and the recording-reproducing opening section 10 is formed between the shell halves 4a and 4b. Although not described in detail, in the disk cartridge 1, the recording-reproducing opening section 10 is sectioned at the central area thereof into a pair of recording-reproducing opening sections 10 in the radial direction. The recording-reproducing head included in the recording-reproducing apparatus 11 passes through each of the recording-reproducing opening sections 10, and is reciprocated in the radial direction of the optical disk 5 by the head driving mechanism. Thus, the data recording-reproducing operation is performed. In the disk cartridge 1, data is recorded or reproduced at a high speed by the recording-reproducing apparatus 11.

In the disk cartridge 1, outer peripheral portions of the upper shell 3 and the lower shell 4 are abutted against each other to form the cartridge housing 2, and the outer peripheral portions have a substantially arc-like shape at a side surface which enters the recording-reproducing apparatus 11 first when the disk cartridge 1 is loaded. In addition, the recording-reproducing opening section 10 is formed such that one end thereof faces the above-mentioned side surface. The upper shell 3 included in the cartridge housing 2 is provided with a rotor-guide wall (not shown) which is formed integrally with the upper shell 3 on an inner surface thereof. The rotor-guide wall has an annular shape as a whole and holds an outer peripheral portion of the inner rotor 6. A portion of the rotor-guide wall which corresponds to the recording-reproducing opening section 10 is cut so as to allow the movement of the recording-reproducing head.

The upper shell 3 is also provided with an annular guide wall 3a which is formed integrally with the upper shell 3. The annular guide wall 3a is disposed inside the rotor-guide wall such that the annular guide wall 3a is concentric with the rotor-guide wall. The annular guide wall 3a provided on the upper shell 3 has a diameter which corresponds to a non-signal-recording region in the signal recording surface 5b which surrounds the center hole 5a in the optical disk 5. As described below, the chucking plate 8 is attached to the inner surface of the central section of the upper shell 3 by fixing the attachment ring member 9 inside the annular guide wall 3a. Here, the upper shell 3 has studs provided with positioning pins at respective corners thereof, and is combined with the lower shell 4 by screwing setscrews into insertion holes formed in the studs. Thus, the cartridge housing 2 is formed.

The lower shell 4 includes a pair of shell halves 4a and 4b, which are symmetric to each other in the left-right direction, as described above. The shell halves 4a and 4b have respective arc-shaped rotor-guide walls which are formed integrally with the shell halves 4a and 4b on the inner surfaces thereof at the respective corners. The rotor-guide walls are abutted against the above-described rotor guide wall on the upper shell 3. Thus, the inner rotor 6 is held at the outer peripheral portion thereof and is rotatably housed in the cartridge housing 2. Although not described in detail, one shell half 4a has a lock member 13 and a spring 14 which form a lock mechanism for the inner rotor 6 at the corner thereof. In the inner-rotor lock mechanism, in the state in which the recording-reproducing opening section 10 is closed by the shutter members 7, the lock member 13 is caused to engage with the inner rotor 6 by an urging force applied by the spring 14, and thereby locks the inner rotor 6. In the inner-rotor lock mechanism, when the disk cartridge 1 is loaded into the recording-reproducing apparatus 11, the lock member 13 is driven so as to release the inner rotor 6 from the locked state.

Here, in the lower shell 4, a plurality of heat-caulking protrusions may be formed integrally with the shell halves 4a and 4b on the inner surfaces thereof, and reinforcing plates formed of thin metal plates made of stainless steel, aluminum, etc., may be attached to the shell halves 4a and 4b using the heat-caulking protrusions. Thus, the lower shell 4 may be reinforced. In the case where the lower shell 4 is reinforced by attaching the reinforcing plates thereto, thermal-deformation prevention performance and impact resistance characteristics of the cartridge housing 2 are improved.

Although not shown in the figures, the lower shell 4 has a guide groove for preventing the disk cartridge 1 from being inserted into the recording-reproducing apparatus 11 in a wrong manner. The guide groove has a lock opening section through which an operating projection of the lock member 13 faces the outside and a rotor opening section through which a portion of the outer peripheral portion of the inner rotor 6 faces the outside. The lower shell 4 has guide pins which project from an inner surface thereof. The guide pins engage with long-hole shaped guide holes formed in the respective shutter members 7, and serve as guides when the respective shutter members 7 open or close the recording-reproducing opening section 10. In addition, although not shown in the figure, the lower shell 4 has positioning holes including circular and elliptical holes in the bottom surface thereof, and the positioning holes are used for positioning the disk cartridge 1 when the disk cartridge 1 is loaded into the recording-reproducing apparatus 11.

In the disk cartridge 1, the inner rotor 6, which is housed in the cartridge housing 2, is made of a wear-resistant synthetic resin, such as POM, in a substantially disk-like shape as a whole such that a guide wall for holding the outer peripheral portion of the optical disk 5 is formed integrally with the inner rotor 6 so as to extend along the outer peripheral edge thereof. In the state in which the optical disk 5 is placed on the principal surface of the inner rotor 6 such that the signal recording surface 5b faces the inner rotor 6 and in which the inner rotor 6 is housed in the cartridge housing 2, a disk storage section is formed between the inner rotor 6 and the inner surface of the upper shell 3. When the guide wall on the inner rotor 6 is engaged with and attached to a guide groove formed in the above-described upper shell 3, the inner rotor 6 is rotatably attached to the cartridge housing 2 such that the optical disk 5 is housed in the cartridge housing 2.

The inner rotor 6 has an inner recording-reproducing opening section 15 which corresponds to the recording-reproducing opening section 10 in the lower shell 4 and which has substantially the same shape as the shape of the recording-reproducing opening section 10. Although not described in detail, a gear portion is formed integrally with the inner rotor 6 at the outer peripheral portion of the guide wall. The gear portion extends from a position where the gear portion faces the outside at the front side when the inner rotor 6 is positioned so as to close the recording-reproducing opening section 10 in the lower shell 4 to a position where the gear portion faces the outside at the rear side when the inner rotor 6 is positioned so as to open the recording-reproducing opening section 10.

Although not described in detail, the inner rotor 6 is provided with a first engaging recess at one side of the gear portion and a second engaging recess at the other side of the gear portion. The first engaging recess engages with a first engaging projection on a shutter-opening member included in a shutter opening mechanism in the recording-reproducing apparatus 11. The second engaging recess engages with a second engaging projection on the shutter-opening member. In the inner rotor 6, the engaging recesses face the outside through the recording-reproducing opening section 10 together with the gear portion. In the state in which the disk cartridge 1 is loaded in the recording-reproducing apparatus 11, the first engaging recess first engages with the first engaging projection on the shutter opening member. In the inner rotor 6, the second engaging recess engages with the lock member 13 while the recording-reproducing opening section 10 is closed by the shutter members 7, and engages with the second engaging projection on the shutter opening member while the recording-reproducing opening section 10 is not closed by the shutter members 7.

Although not described in detail, a pair of rotation restricting projections for restricting the amount of rotation are provided on the outer peripheral portion of the guide wall on the inner rotor 6. The rotation restricting projections face respective rotation restricting projections formed on the upper shell 3 and are spaced from each other by a predetermined distance. When the inner rotor 6 is rotated in a direction for opening the recording-reproducing opening section 10, one of the rotation restricting projections comes into contact with the corresponding rotation restricting projection on the upper shell 3. Thus, the rotation of the inner rotor 6 is restricted. While the inner rotor 6 is in this rotation-restricted state, the recording-reproducing opening section 10 is in the opened state and the inner recording-reproducing opening section 15 and the recording-reproducing opening section 10 face each other at the respective ends thereof. When the inner rotor 6 is rotated in a direction for closing the recording-reproducing opening section 10, the other one of the rotation restricting projections comes into contact with the corresponding rotation restricting projection on the upper shell 3. Thus, the rotation of the inner rotor 6 is restricted. While the inner rotor 6 is in this rotation-restricted state, the recording-reproducing opening section 10 is closed by the inner rotor 6 and the inner recording-reproducing opening section 15 and the recording-reproducing opening section 10 are maximally inclined with respect to each other.

Although not shown in the figures, in the disk cartridge 1, a pair of support shafts are formed integrally with the inner rotor 6 on the bottom surface thereof at point-symmetrical positions with respect to a central section. Each of the shutter members 7 is disposed between the inner rotor 6 and the lower shell 4 such that the shutter member 7 is rotatably supported by the corresponding support shaft. The individual shutter members 7 are made of, for example, a synthetic resin, such as POM, and are formed into substantially semicircular plate-like shapes that are symmetric to each other. Each shutter member 7 is attached to the inner rotor 6 by inserting the corresponding support shaft through a shaft hole formed in the shutter member 7 at one end thereof. In addition, as described above, the shutter members 7 have the long holes through which the guide pins formed on the lower shell 4 are inserted.

In a normal state in which the second engaging recess in the inner rotor 6 engages with a lock projection provided on the lock member 13, the individual shutter members 7 close the recording-reproducing opening section 10 through the inner recording-reproducing opening section 15. When the disk cartridge 1 is loaded in the recording-reproducing apparatus 11 and the shutter opening mechanism performs the operation of driving the inner rotor 6, the individual shutter members 7 are released from the locked state by the inner rotor 6. Thus, the shutter members 7 operate so as to change state in which the recording-reproducing opening section 10 is closed to the state in which the recording-reproducing opening section 10 is opened.

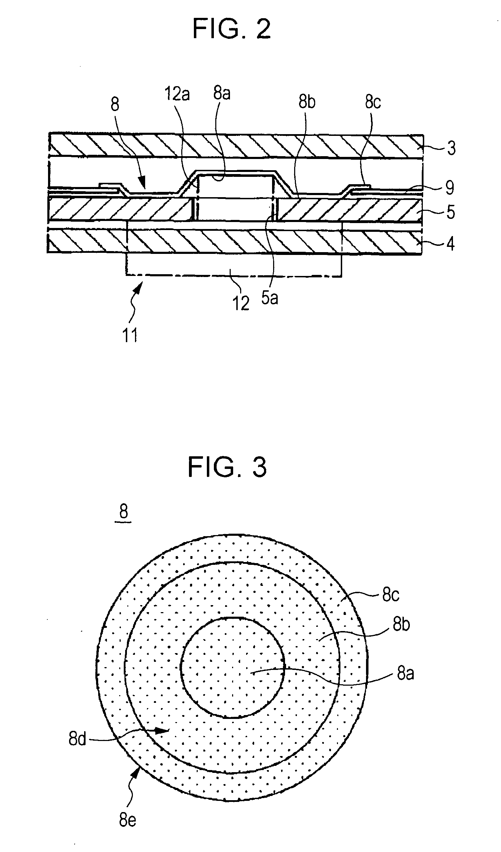

In the disk cartridge 1, the chucking plate 8 is attached to the inner surface of the upper shell 3 with the attachment ring member 9 therebetween at a substantially central section of the upper shell 3. As described above, in the state in which the disk cartridge 1 is loaded in the recording-reproducing apparatus 11, the disk table 12 enters the cartridge housing 2 through the recording-reproducing opening section 10 in the opened state and a chucking operation shown in Fig. 2 is performed. Then, the optical disk 5 is rotated by the disk table 12.

In the disk cartridge 1, the chucking plate 8 is attached to the inner surface of the upper shell 3 with the attachment ring member 9 therebetween at the central position of the upper shell 3. As described below, the chucking plate 8 operates together with the disk table 12 in the recording-reproducing apparatus 11 so as to clamp and rotate the optical disk 5. The attachment ring member 9 is made of a suitable synthetic resin material and is formed in a ring-like shape having an outer diameter that is substantially equal to the inner diameter of the annular guide wall 3a formed on the inner surface of the upper shell 3. The attachment ring member 9 has a guide hole 9a at a central section thereof, and an attachment flange portion 9b is formed so as to surround the guide hole 9a. The inner diameter of the guide hole 9a in the attachment ring member 9 is larger than that of the center hole 5a in the optical disk 5, and the attachment flange portion 9b is formed such that the attachment flange portion 9b is gradually curved in a bowl-like shape over a predetermined area from the inner peripheral edge of the guide hole 9a toward the upper shell 3 and such that an outer peripheral section of the attachment flange portion 9b is flat.

The attachment ring member 9 is attached to the upper shell 3 by bonding the attachment flange portion 9b to the inner surface of upper shell 3 in an area surrounded by the annular guide wall 3a in such a manner that the chucking plate 8 is placed in the space formed by the bowl-like portion of the attachment ring member 9. Here, the attachment ring member 9 may be formed of, for example, a wear-resistant synthetic resin material and may be fixed to the upper shell 3 by a suitable method, such as ultrasonic welding.

The chucking plate 8 is formed by using a stainless steel plate 21, which will be described below, as a material and is formed in a substantially disk-like shape as a whole, as shown in Figs. 1 and 3. The chucking plate 8 has a table-fitting recess portion 8a formed by a bulging process at a central section thereof, and a clamping portion 8b and a retaining flange portion 8c are formed integrally with the table-fitting recess portion 8a so as to surround the table-fitting recess portion 8a. Here, the substrate used as a material of the chucking plate 8 is, of course, not limited to the stainless steel plate, and a suitable substrate having high anti-rust performance is preferably used. The diameter of the clamping portion 8b of the chucking plate 8 is larger than the diameter of the guide hole 9a in the attachment ring member 9 and is smaller than the diameter of the attachment flange portion 9b. The diameter of the table-fitting recess portion 8a of the chucking plate 8 is substantially equal to the diameter of a spindle cone 12a provided on the disk table 12 in the recording-reproducing apparatus 11. In addition, the diameter of a projecting portion which forms the table-fitting recess portion 8a is smaller than the diameter of the guide hole 9a in the attachment ring member 9.

The chucking plate 8 is disposed inside the attachment ring member 9 and is placed on the attachment ring member 9 such that the projecting portion which forms the table-fitting recess portion 8a faces the inner surface of the upper shell 3. The chucking plate 8 is placed on the attachment ring member 9 such that the clamping portion 8b faces the lower shell 4, that is, the optical disk 5, through the guide hole 9a and such that the retaining flange portion 8c is retained by the inner peripheral portion which surrounds the guide hole 9a. When the attachment ring member 9 is bonded to the upper shell 3, the chucking plate 8 is rotatably placed in the space formed by the attachment ring member 9 and the inner surface of the upper shell 3.

When the disk cartridge 1 is loaded in the recording-reproducing apparatus 11, the chucking plate 8 is chucked by the disk table 12 in the recording-reproducing apparatus 11 which enters the cartridge housing 2 through the recording-reproducing opening section 10, the state of which is changed from the opened state to the closed state by the operation of the shutter members 7, and the inner recording-reproducing opening section 15. Although not described in detail, the disk table 12 is rotated by a rotating mechanism. The diameter of the disk table 12 is larger than the diameter of the center hole 5a in the optical disk 5, and a magnet is placed in the disk table 12. The disk table 12 has the spindle cone 12a at an end thereof. The diameter of the spindle cone 12a is substantially equal to the diameter of the center hole 5a and is slightly smaller than the diameter of the table-fitting recess portion 8a in the chucking plate 8.

As shown in Fig. 2, when the disk table 12 enters the cartridge housing 2, the disk table 12 comes into contact with the peripheral portion surrounding the center hole 5a in the optical disk 5. In addition, the spindle cone 12a passes through the center hole 5a and engages with the table-fitting recess portion 8a of the chucking plate 8. The chucking plate 8 receives a magnetic force applied by the magnet, and is thereby attracted to the disk table 12. As a result, the optical disk 5 is clamped and held between the disk table 12 and the chucking plate 8. The outer peripheral surface of the spindle cone 12a which is inserted through the center hole 5a serves to position the optical disk 5 on the disk table 12.

In the disk cartridge 1, during the chucking operation for chucking the chucking plate 8 performed by the disk table 12, the chucking plate 8 placed inside the attachment ring member 9 is moved such that the disk table 12 and the optical disk 5 slide along the principal surface of the chucking plate 8. Thus, in the disk cartridge 1, a disk-receiving operation is performed in which the spindle cone 12a on the disk table 12 is fitted to the center hole 5a in the optical disk 5. In the disk cartridge 1, a surface of the chucking plate 8 which faces the disk table 12 and the optical disk 5 has a low coefficient of friction so that the sliding performance can be improved. Therefore, the disk table 12 and the optical disk 5 slide smoothly.

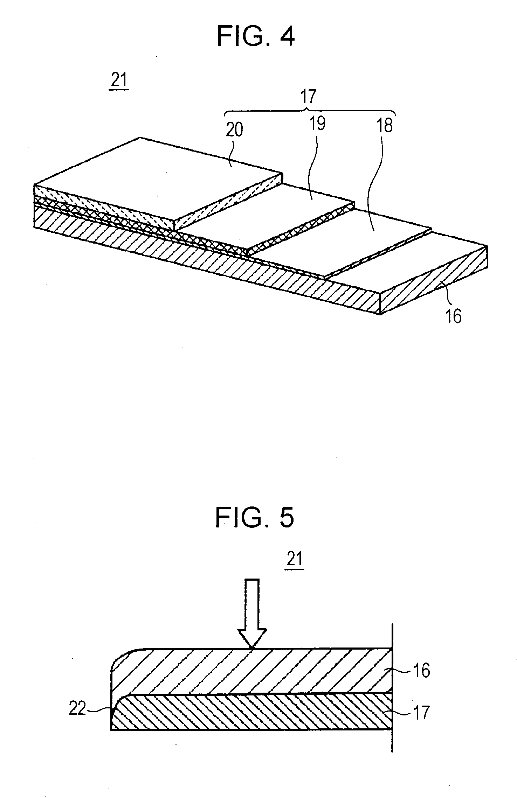

The chucking plate 8 is formed by using the plate 21 as a material, and the plate 21 is obtained by forming a slidability film 17 on a stainless steel substrate 16 only at one side thereof. Here, as described above, the substrate used as a material of the chucking plate 8 is, of course, not limited to the stainless steel plate, and any plate having the slidability film 17 formed on a predetermined substrate only at one side thereof may be used. Referring to Figs. 3 and 4, a first principal surface of the chucking plate 8 in which the table-fitting recess portion 8a is formed and which faces the optical disk 5 is formed as a slidability-film-applied surface 8d on which the slidability film 17 is formed. In addition, a second principal surface of the chucking plate 8 is formed as a non-slidability-film surface 8e at which no films are formed on the stainless steel substrate 16. As shown in Fig. 3, the slidability film 17 formed on the chucking plate 8 includes a chemical conversion coating film 18 which is formed on the principal surface of the stainless steel substrate 16 as a first layer, a primer coating layer 19 which is formed on the chemical conversion coating film 18 as a second layer, and a fluorocarbon resin coating layer 20 formed on the primer coating layer 19 as a third layer.

The chemical conversion coating film 18 is generally formed by chemical conversion coating for forming a film of phosphate compound portion on the surface of a metal plate or the like using a chemical conversion coating agent in a heated state.
The chemical conversion coating film 18 has a function of improving the anti-rust performance and the adhesion between the stainless steel substrate 16 and the slidability film 17. The primer coating layer 19 is formed by, for example, a roll coating method by applying a suitable primer on the stainless steel substrate 16 having the chemical conversion coating film 18 formed thereon. The primer coating layer 19 has a thickness of about 5 µm, and serves to improve the anti-rust performance and the adhesion between the stainless steel substrate 16 and the fluorocarbon resin coating to be formed on the primer coating layer 19.

The fluorocarbon resin coating layer 20 is formed by, for example, a roll coating method by applying a fluorocarbon resin paint on the stainless steel substrate 16 having the primer coating layer 19 formed thereon. The fluorocarbon resin coating layer 20 has a thickness of about 10 µm, and has a function of improving the wear resistance and improving the sliding performance by reducing the coefficient of friction. Here, the sliding performance and the wear resistance can be improved by forming the fluorocarbon resin coating layer 20 using a fluorocarbon resin paint in which a suitable aggregate is added.

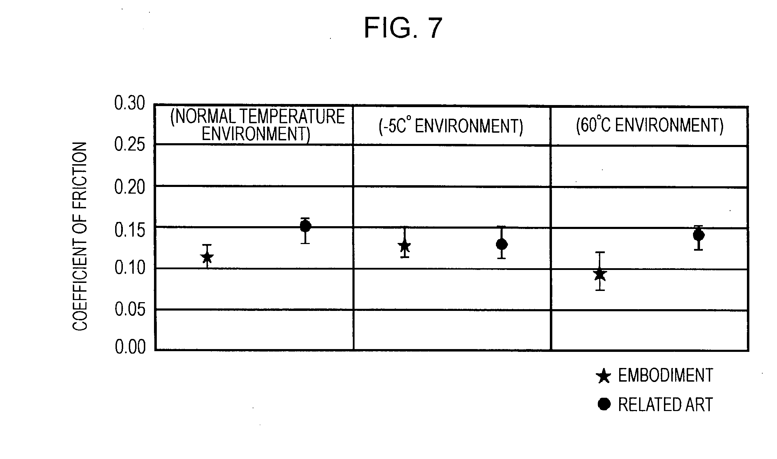

In Fig. 7, the frictional coefficient characteristics of the slidability-film-applied surface 8d of the chucking plate 8 having the above-described structure are compared with those of the painting-type chucking plate according to the related art. Here, in the figures, the black star mark shows the characteristics of the chucking plate 8 according to the embodiment and the black circle mark shows the characteristics of the painting-type chucking plate according to the related art. The coefficient of friction of the chucking plate 8 in a normal temperature environment is about 0.12, and is lower than that of the chucking plate according to the related art, which is about 0.15. The coefficient of friction of the chucking plate 8 in an environment with a temperature of -5°C (low-temperature environment) is about 0.13, which is equivalent to that of the painting-type chucking plate. The coefficient of friction of the chucking plate 8 in an environment with a temperature of 60°C (high-temperature environment) is about 0.09, and is lower than that of the chucking plate according to the related art, which is about 0.14.

As described above, the chucking plate 8 is attached to the cartridge housing 2 such that the slidability-film-applied surface 8d faces the optical disk 5. The chucking plate 8 is formed using the stainless steel plate 21 as a material, so that the anti-rust performance of the chucking plate 8 is equivalent to or higher than the anti-rust performance of the painting-type chucking plate according to the related art. Therefore, generation of rust can be suppressed even when the disk cartridge 1 is used or left unused for a long time in a severe environment, such as a high-temperature, high-humidity environment. The slidability film 17 having heat-resistant, non-adhesive characteristics is formed on the principal surface of the chucking plate 8 along which the disk table 12 and the optical disk 5 slide. Therefore, the sliding performance with respect to the disk table 12 and the optical disk 5 is equivalent to or higher than the painting-type chucking plate according to the related art. In the chucking operation, the optical disk 5 and the disk table 12 smoothly slide along the chucking plate 8, and the disk-receiving operation in which the spindle cone 12a is fitted to the center hole 5a in the optical disk 5 can be accurately performed.

As shown in Fig. 5, the chucking plate 8 having the above-described structure is formed by a press-blanking process in which a punch is pressed against the stainless steel plate 21 such that the non-slidability-film surface 8e serves as a pressing surface. Due to the press-blanking process, in the chucking plate 8, a burr 22 is formed along the outer peripheral edge of the retaining flange portion 8c. The burr 22 projects into the slidability film 17 from the stainless steel substrate 16. In the pressing process of the chucking plate 8, the conditions of the pressing process, such as the dimensional accuracies of the punch and die, the selection of lubricant, and the speed of the punch, are optimally set so that the size of the burr 22 which is formed along the outer peripheral edge is controlled to be equal to or less than the thickness of the slidability film 17, as shown in the figure. In addition, after the press-blanking process, as described below, the chucking plate 8 is subjected to a back-end process in which an outer peripheral end surface of the retaining flange portion 8c, along which the chucking plate 8 is punched out in the press-blanking process, is subjected to peripheral-surface pressing process over the entire circumference thereof. Thus, a finishing process is performed.

As described above, the chucking plate 8 is placed in the space between the inner surface of the upper shell 3 and the attachment ring member 9 such that the chucking plate 8 is somewhat moveable. The chucking plate 8 moves while the retaining flange portion 8c thereof is in contact with the attachment flange portion 9b of the attachment ring member 9. Since the size of the burr 22 generated at the retaining flange portion 8c is controlled to be equal to or less than the thickness of the slidability film 17, the smoothness of the movement can be ensured. In addition, the burr 22 is prevented from falling onto the optical disk 5 and adhering to the optical disk 5.

The chucking plate 8 is formed by subjecting the stainless steel plate 21, which is obtained by forming the slidability film 17 on the stainless steel substrate 16 only at one side thereof, to a predetermined pressing process. Therefore, an end face of the stainless steel substrate 16 is directly exposed at the outer peripheral end surface of the retaining flange portion 8c, and the slidability film 17 is not formed at the outer peripheral end surface. As described above, the chucking plate 8 is placed in the space between the inner surface of the upper shell 3 and the attachment ring member 9 such that the chucking plate 8 is somewhat moveable. If the disk cartridge 1 is roughly handled and dropped or if an impact or vibration is applied to the disk cartridge 1 while the disk cartridge 1 is being transported, there is a risk that the retaining flange portion 8c of the chucking plate 8 comes into contact with another component. Even in such a case, the slidability film 17 can be prevented from becoming partially separated from the outer peripheral end surface of the retaining flange portion 8c.

Therefore, the slidability film 17 which provides the above-described sliding performance can be reliably retained without precisely and carefully packaging the chucking plate 8 when the chucking plate 8 is handled. In addition, in the state in which the chucking plate 8 is attached to the disk cartridge 1, a problem that the recording-reproducing characteristics will be degraded when the slidability film 17 is partially separated and the pieces thereof adhere to the disk surface can be avoided.
As described above, according to the chucking plate 8, the disk-receiving operation for receiving the optical disk 5 can be accurately performed and the data recording-reproducing operation can performed by the recording-reproducing apparatus 11 with high precision. Thus, the reliability can be improved.

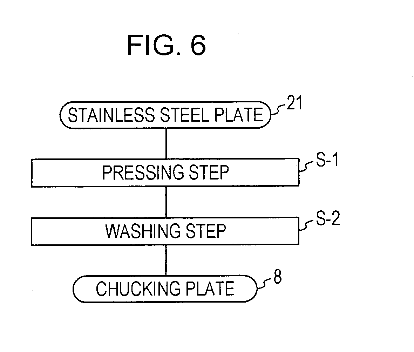

As shown in Fig. 6, the chucking plate 8 is manufactured by subjecting the supplied stainless steel plate 21 to at least a pressing step s-1 and a washing step s-2. As described above, the stainless steel plate 21 is formed by forming the slidability film 17, which includes the chemical conversion coating film 18, the primer coating layer 19, and the fluorocarbon resin coating layer 20, on the stainless steel substrate 16 only at one side thereof. The stainless steel plate 21 is provided by a manufacturer in the form of a roll or a sheet having a suitable shape, and is set to a material feed section in a pressing machine.

In the pressing step s-1, a transfer pressing step, for example, is performed in which a plurality of pressing dies are arranged along a material-conveying path in the pressing machine and continuous press processing is performed. More specifically, the stainless steel plate 21 is intermittently fed at a constant speed and is subjected to a predetermined pressing process performed by each of the pressing dies. Thus, an intermediate body of the chucking plate 8 is continuously manufactured. The pressing step s-1 includes a blanking processing step in which the disk-shaped intermediate body is punched out from the stainless steel plate 21 and an extrusion step of forming the table-fitting recess portion 8a and the retaining flange portion 8c on the disk-shaped intermediate body by extrusion molding. Here, the pressing step s-1 is, of course, not limited to the above-described transfer pressing step, and the chucking plate 8 may also be formed by another type of pressing step, such as a progressive pressing step. In the pressing step s-1, the outer peripheral end surface of the retaining flange portion 8c, along which the chucking plate 8 is punched out in the press-blanking process, can be subjected to, for example, a burr smoothing process. When the burr smoothing process is performed, the outer peripheral end surface of the retaining flange portion 8c of the chucking plate 8 can be formed into a smooth circular surface. In addition, in the chucking plate 8, the degree of smoothing of the burr may be controlled such that the bur does not project from the slidability film.

In the washing step s-2, lubricant supplied to the material and dirt and the like attached to the material in the pressing step s-1 are removed. Here, in the process of manufacturing the chucking plate 8, a surface finishing process, such as a barreling process, may also be performed. In the manufacturing process of the chucking plate 8, a drying step, for example, is performed after the washing step s-2 as a back-end process. Then, the thus-manufactured chucking plate 8 is transferred to the step of assembling the disk cartridge 1. In the manufacturing process of the chucking plate 8, unlike the manufacturing process of the painting-type chucking plate according to the related art, it is not necessary to perform the painting step after the pressing step. The pressing step and the painting step for forming the pressed product are completely different steps performed in different factories. More specifically, after the pressed part is subjected to the drying step, the pressed part is subjected to processes including packaging, and is transferred to a painting factory. In the painting factory, the part is unpackaged, inspected, preliminarily washed, dried, set in a painting machine, etc., and is then subjected to electrostatic spray painting. In contrast, in the manufacturing process of the chucking plate 8, the painting step and all of the steps performed before the painting step can be omitted. Therefore, the number of steps can be considerably reduced and the manufacturing costs can be reduced. According to the manufacturing process of the chucking plate 8, an inexpensive chucking plate 8 can be efficiently manufactured.

When the disk cartridge 1 having the above-described structure is loaded into the recording-reproducing section in the recording-reproducing apparatus 11, the shutter members 7 are operated so as to open the recording-reproducing opening section 10. Then, the chucking plate 8 is magnetically chucked by the disk table 12 which passes through the recording-reproducing opening section 10. In the disk cartridge 1, the spindle cone 12a on the disk table 12 passes through the center hole 5a, and the outer peripheral portion of the optical disk 5 which surrounds the center hole 5a is clamped between the disk table 12 and the chucking plate 8. Thus, the optical disk 5 is retained.

In the disk cartridge 1, the recording-reproducing head passes through the recording-reproducing opening section 10 and faces the signal recording surface 5b of the optical disk 5 which is retained by the disk table 12. In the disk cartridge 1, the recording-reproducing apparatus 11 performs the recording and/or reproducing operation. Accordingly, the disk table 12 rotates and the optical disk 5 which is held by the disk table 12 and the chucking plate 8 also rotates while data is recorded and/or reproduced by the recording-reproducing head which moves along the signal recording surface 5b in the radial direction thereof.

The disk cartridge 1 includes the chucking plate 8 which has a good sliding performance with respect to the optical disk 5 and the disk table 12 since the chucking plate 8 is manufactured by using the stainless steel plate 21, which is obtained by forming the slidability film 17 having heat-resistant, non-adhesive characteristics on the stainless steel substrate 16 only at one side thereof, as a material. In the disk cartridge 1, sufficient anti-rust performance is provided since the stainless steel substrate 16 is used as the material. In addition, in the chucking operation performed by the disk table 12, the chucking plate 8, the optical disk 5, and the disk table 12 move smoothly so that the disk-receiving operation for receiving the optical disk 5 can be accurately performed.

The disk cartridge 1 includes an inexpensive chucking plate 8 which is efficiently manufactured at low cost by a manufacturing process in which it is not necessary to perform the painting step, the steps performed before the painting step, etc., as the back-end process after the pressing step to which the stainless steel plate 21 is subjected. Therefore, the costs can be reduced. In addition, the disk cartridge 1 includes the chucking plate 8 which has no film at the outer peripheral edge thereof. Therefore, the slidability film 17 can be prevented from becoming partially separated while the disk cartridge 1 is being transported. As a result, the reliability can be increased.

Here, it is to be noted that the present invention is, of course, not limited to the chucking plate 8 according to the above-described embodiment, and may be applied to chucking plates in various shapes which have the slidability film 17 on the surface which faces the optical disk 5 and the disk table 12. In the chucking plate 8, the coefficient of friction of the slidability film 17 formed on the stainless steel substrate 17 may be 0.3 or less.

## Claims

1. A chucking plate for a disk cartridge in which a disk is rotatably housed in a cartridge housing including an upper shell and a lower shell which are combined together, the chucking plate being attached to an inner surface of a central section of the upper shell with an attachment ring member therebetween such that the chucking plate faces a center hole in the disk, the chucking plate holding and rotating the disk while being magnetically chucked on a disk table included in a disk driving unit in the state in which the disk cartridge is loaded in a recording-reproducing apparatus,
wherein the chucking plate for the disk cartridge is **characterized in that** a plate having a slidability film formed at one side thereof is used as a material of the chucking plate and the chucking plate is attached to the cartridge housing such that the side at which the slidability film is formed faces the disk.

2. The chucking plate for the disk cartridge according to claim 1, **characterized in that** the plate used as the material is obtained by forming the slidability film including a primer coating layer and a fluorocarbon resin coating layer on a principal surface of a substrate.

3. The chucking plate for the disk cartridge according to claim 1, **characterized in that** the slidability film is not formed on an outer peripheral end surface of the chucking plate.

4. A method for manufacturing a chucking plate for a disk cartridge in which a disk is rotatably housed in a cartridge housing including an upper shell and a lower shell which are combined together, the chucking plate being attached to an inner surface of a central section of the upper shell with an attachment ring member therebetween such that the chucking plate faces a center hole in the disk, the chucking plate holding and rotating the disk while being magnetically chucked on a disk table included in a disk driving unit in the state in which the disk cartridge is loaded in a recording-reproducing apparatus,
wherein the method for manufacturing the chucking plate for the disk cartridge is **characterized in that**
a plate having a slidability film formed at one side thereof is used, and
the chucking plate is manufactured by subjecting the plate to a pressing step from a side at which the slidability film is not formed and to a washing step, and is attached to the cartridge housing such that the side at which the slidability film is formed faces the disk.

5. A disk cartridge in which a disk is rotatably housed in a cartridge housing including an upper shell and a lower shell which are combined together, the disk cartridge including a chucking plate attached to an inner surface of a central section of the upper shell with an attachment ring member therebetween such that the chucking plate faces a center hole in the disk, the chucking plate holding and rotating the disk while being magnetically chucked on a disk table included in a disk driving unit in the state in which the disk cartridge is loaded in a recording-reproducing apparatus,
wherein the disk cartridge is **characterized in that** the chucking plate is manufactured using a plate having a slidability film formed at one side thereof as a material by subjecting the plate to predetermined press processing from a side at which the slidability film is not formed, and is attached to the cartridge housing such that the side at which the slidability film is formed faces the disk.

6. The disk cartridge according to claim 5, **characterized in that** the slidability film is not formed on an outer peripheral end surface of the chucking plate.
